# EUROPEAN PATENT SPECIFICATION

(11) **EP 2 146 875 B1**
(45) Date of publication and mention of the grant of the patent: **26.01.2011**
(21) Application number: 07756228.8
(22) Date of filing: 08.05.2007
(51) Int. Cl.: B60R 21/26

(54) **Axial flow inflator device for inflatable restraint installations**
Axialstromaufblasvorrichtung für aufblasbare Rückhalteinstallationen
Dispositif gonfleur à écoulement axial pour installations de retenue gonflables

(43) Date of publication of application: 27.01.2010
(73) Proprietor: Autoliv ASP, Inc., Ogden, Utah 84405 (US)
(72) Inventor: CLARK, Marcus, Kaysville, UT 84037 (US); OLSEN, Steve, Ogdeh, UT 84404 (US); QUINNEY, Patti, Layton, UT 84040 (US); LONGHURST, Nyle, K., Layton, UT 84040 (US); PATTON, Yvonnig, F-29470 Plougastel Daoulas (FR)
(74) Representative: Bomer, Françoise Marie
(86) International application number: PCT/US2007/011042
(87) International publication number: WO 2008/140441

(56) References cited:
- DE-A1- 4 005 768
- US-A1- 2005 035 581
- US-A1- 2007 024 038

## Description

### BACKGROUND OF THE INVENTION

This invention relates generally to the providing or supplying of inflation gas and, more particularly, to the providing or supplying of such inflation gas via an elongated inflator such as may be desired for certain inflatable passive restraint systems for use in vehicles for restraining the movement of an occupant in the event of a vehicular collision.

It is well known to protect a vehicle occupant by means of safety restraint systems which self-actuate from an undeployed to a deployed state without the need for intervention by the operator, i.e., "passive restraint systems." Such systems commonly contain or include an inflatable vehicle occupant restraint or element, such as in the form of a cushion or bag, commonly referred to as an "airbag cushion." In practice, such airbag cushions are typically designed to inflate or expand with gas when the vehicle encounters a sudden deceleration, such as in the event of a collision. Such airbag cushions may desirably deploy into one or more locations within the vehicle between the occupant and certain parts of the vehicle interior, such as the doors, steering wheel, instrument panel or the like, to prevent or avoid the occupant from forcibly striking such parts of the vehicle interior. For example, typical or customary vehicular airbag cushion installation locations have included in the steering wheel, in the dashboard on the passenger side of a car, along the roof line of a vehicle such as above a vehicle door, and in the vehicle seat such as in the case of a seat-mounted airbag cushion. Other airbag cushions such as in the form of knee bolsters and overhead airbags also operate to protect other or particular various parts of the body from collision.

In addition to an airbag cushion, inflatable passive restraint system installations also typically include a gas generator, also commonly referred to as an "inflator." Upon actuation, such an inflator device desirably serves to provide an inflation fluid, typically in the form of a gas, used to inflate an associated airbag cushion. Various types or forms of inflator devices have been disclosed in the art for use in inflating an inflatable restraint system airbag cushion.

One particularly common type or form of inflator device used in inflatable passive restraint systems is commonly referred to as a pyrotechnic inflator. In such inflator devices, gas used in the inflation of an associated inflatable element is derived from the combustion of a pyrotechnic gas generating material.

Pyrotechnic inflators, such as used for the inflation of non-driver side airbag cushions, e.g., the inflation of passenger and side airbag cushions, commonly are cylindrical in shape and typically have a length to diameter ratio (also commonly referred to as "LD ratio") of at least 3 or 4 and, in the case of passenger side applications typically in the range of about 4 to about 5. In practice, the L/D ratios of such inflator devices have been limited or restricted by the general need or desire to ensure relative uniformity in ignitability over the length of the inflator device. In particular, it has proven difficult to attain ignition of an extended length of pyrotechnic gas generant material in a uniform manner while in an assembly of small diameter (or a large L/D ratio). There is an ongoing need for inflator devices having either or both improved and increased flexibility in either or both gas production and discharge characteristics.

The document DE 4005768 describes a cylindrical gas generator for the inflatable protective cushion of a crash protection system. This generator comprises two combustion chambers filled with solid explosive and joined together via an ignition opening. One of said chamber is provided with an ignition unit. This gas generator is of compact design.

The document US 2007 024038 relates to a gas generator, including a tubular housing having a gas discharge port, a combustion chamber provided inside the tubular housing and charged with a solid gas generating agent and a flame transmission tube disposed in an axial direction of the tubular housing inside the combustion chamber and provided with a plurality of communication holes that communicate with the combustion chamber. The flame transmission tube has an ignition region provided with an ignition device and a flame transmission region. The ignition region and the flame transmission region meet different requirements in terms of mean inner diameter and total opening surface area of the communication holes.

None of theses two documents solves the above mentioned problems.

Finally, the document US 2005/0035581 describes an inflator comprising an axially elongated housing containing a supply of gas gencrant material reactable to produce a supply of gas , the housing having opposed first and second axial ends. and an initiator disposed at the first axial end in initiation discharge communication, in response to receipt of an activation signal, with at least a portion of the supply of the gas generant material, the housing comprising a first plurality of inflation gas discharge openings adjacent the first axial end, and a second plurality of inflation gas discharge openings adjacent the second axial end.

### SUMMARY OF THE INVENTION

A general object of the invention is to provide an improved inflator device for inflatable airbag cushion restraint system.

A more specific objective of the invention is to overcome one or more of the problems described above.

The general object the invention can be attained, at least in part through an inflator of the kind previously in relation with the document US 2005/0035581.

According to the invention, said inflator additionally comprises:
a baffle disposed within the housing, the baffle comprising a passageway having a first end and a second end, and a blockage disposed to restrict fluid flow between the first and second ends, a plurality of first end holes formed proximate the passageway first end, and a plurality of second end holes formed proximate the passageway second end, the initiator is being further disposed in initiation discharge flow communication with the passageway first end, and at least a substantial portion of the supply of gas generant material being disposed outside the passageway to receive the initiation discharge through the first end holes, combust in response to receipt of the initiation discharge to produce gas, and communicate at least a portion of the gas into the second end through the second end holes.

The invention further comprehends an inflator including a cylindrical housing containing a supply of pyrotechnic gas generant material reactable to produce a supply of gas. The housing has opposed first and second axial ends and a length to diameter ratio in the range of 3 to 8, and desirably 4 to 8. An initiator is disposed at the first axial end in initiation discharge communication, in response to receipt of an activation signal, with at least a portion of the supply of the gas generant material.

The housing includes a first plurality of inflation gas discharge openings adjacent the first axial end and a second plurality of inflation gas discharge openings adjacent the second axial end.

The invention still further comprehends an inflator including a cylindrical housing having opposed first and second axial ends and a length to diameter ratio in the range of 3 to 8, and desirably 4 to 8. The housing forms a central combustion chamber portion containing a supply of pyrotechnic gas generant material reactable to produce a supply of gas, and first and second end diffuser portions spaced apart by the central combustion chamber portion and disposed at opposed first and second axial ends of the housing. A first plurality of inflation gas discharge openings are disposed adjacent the first axial end and a second plurality of inflation gas discharge openings are disposed adjacent the second axial end.

A first filter element is disposed within the first end diffuser portion, and is effective to treat gas produced within the combustion chamber prior to passage through the first plurality of inflation gas discharge openings. A second filter element is disposed within the second end diffuser portion, and is effective to treat gas produced within the combustion chamber prior to passage through the second plurality of inflation gas discharge openings. An initiator is disposed at the first axial end and, in response to receipt of an activation signal, in initiation discharge communication with at least a portion of the supply of the gas generant material.

A first divider wall separates the central combustion chamber portion from the first end diffuser portion. The first divider wall includes an outer perimeter and a central orifice for passage of initiation discharge from the initiator to the central combustion chamber portion. The first divider wall also includes at least one outer orifice disposed between the central orifice and the first divider wall outer perimeter for passage of a first portion of gas produced within the combustion chamber from the combustion chamber and into the first end diffuser portion.

A baffle is disposed within the housing central combustion chamber portion. The baffle includes a passageway having a first end and a second end and a blockage disposed to restrict fluid flow between the passageway first end and the passageway second end. The baffle includes a plurality of first end holes formed proximate the passageway first end, and a plurality of second end holes formed proximate the passageway second end. The initiator is further disposed in initiation discharge flow communication with the passageway first end. At least a substantial portion of the supply of gas generant material is disposed outside the passageway to receive the initiation discharge through the first end holes, combust in response to receipt of the initiation discharge to produce gas.

A second portion of gas produced within the combustion chamber passes through the baffle second end holes into the second end. A second divider wall separates the central combustion chamber portion from the second end diffuser portion. The second divider wall includes an outer perimeter and a central orifice for passage of the second portion of gas produced within the combustion chamber from the combustion chamber and into the second end diffuser portion.

Other objects and advantages will be apparent to those skilled in the art from the following detailed description taken in conjunction with the appended claims and drawings.

### BRIEF DESCRIPTION OF THE DRAWINGS

FIG. 1 is a sectional view of an inflator according to one embodiment of this invention.
FIG. 2 is a perspective view of the first divider wall of the inflator shown in FIG. 1.
FIG. 3 is a perspective view of the baffle of the inflator shown in FIG. 1.
FIG. 4 is a sectional view of an inflator according to another embodiment of this invention.
FIG. 5 is a sectional view of an inflator according to yet another embodiment of this invention.
FIG. 6 is a perspective view of the rupturable membrane of the embodiment shown in FIG. 5.
FIG. 7 is a perspective view of a grain holder according to one embodiment of this invention.

### DETAILED DESCRIPTION OF THE INVENTION

The present invention provides an inflator device for inflating an associated inflatable airbag cushion. The inflator device in accordance with one preferred embodiment has a generally elongated cylindrical shape. Such an inflator device desirably discharges inflation gas from both axial ends, thereby allowing greater flexibility in airbag module design.

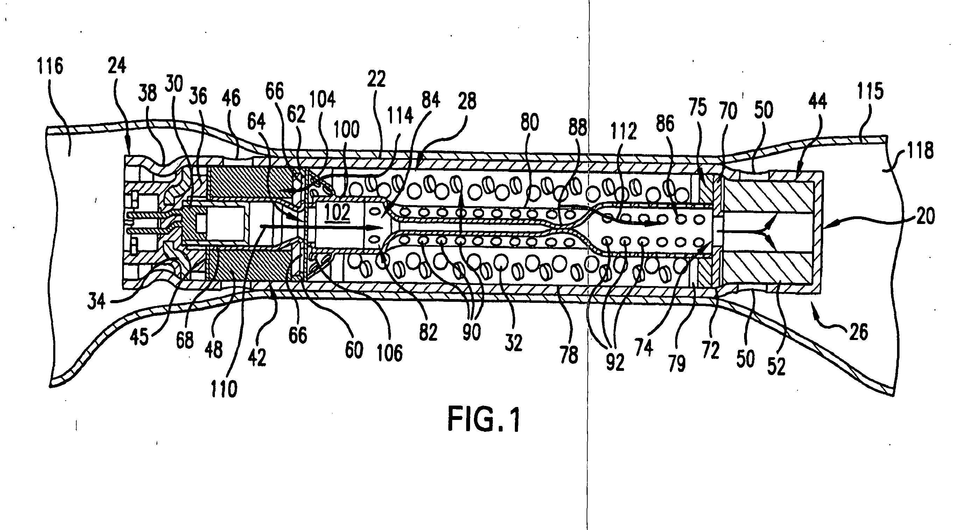

FIG. 1 illustrates an inflator 20 according to one embodiment ofthis invention. The inflator 20 includes an axially elongated one-piece housing 22, having a first end 24 opposite a second end 26. Various and alternative sizes, shapes and configurations are available for the housing according to the invention. In one embodiment of this invention the axially elongated housing 22 is cylindrical with a length to diameter ratio of at least 4, and more desirably in range of about 4 to about 8.

The housing 22 includes a central combustion chamber portion 28 containing a supply of pyrotechnic gas generant material 32, shown in a tablet form, reactable to produce a supply of gas. An initiator 30, such as is known and available to those skilled in the art, is disposed at the first axial end 24. The initiator 30 is in initiation discharge communication with at least a portion of the supply of the gas generant material 32. In response to receipt of an activation signal, the initiator 30 activates to, in turn, ignite the gas generant material 32 to produce the supply of gas. The initiator 30 is attached to an adapter plate 34 by an injection molded material 36. The adapter plate 34 is held within the housing by a crimp 38 formed by or in the housing 22. In the embodiment of FIG. 1, the components of the inflator are installed within the housing 22 through the open first end 24, and held in position against the closed second end 26 by the crimped in place adapter plate 34.

The housing 22 includes a first end diffuser portion 42 and a second end diffuser portion 44 spaced apart by the central combustion chamber portion 28 and disposed at opposed first and second axial ends 24 and 26, respectively. A first plurality of inflation gas discharge openings 46 are disposed toward the first axial end 24, and are a part of the first end diffuser portion 42. A first filter element 48 is disposed within the first end diffuser portion 42, and is effective to treat gas produced within the combustion chamber 28 prior to passage through the first plurality of inflation gas discharge openings 46 into an associated airbag. In one preferred embodiment of the invention, the filter element 48 is formed of a compressed or wrapped metal wire mesh. An optional heat shield element 45 can be disposed between the filter element 48 and the injection molded material 36.

A second pluralityof inflation gas discharge openings 50 are similarly disposed toward the second axial end 26, and are a part of the second end diffuser portion 44. A second filter element 52 is disposed within the second end diffuser portion 44 and is effective to treat gas produced within the combustion chamber 28 prior to passage through the second plurality of inflation gas discharge openings 50.

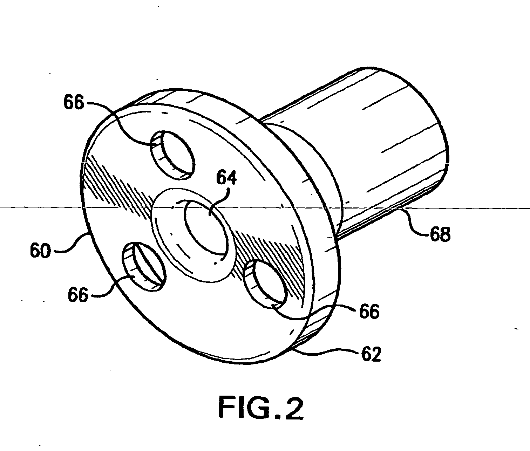

As shown in FIGS. 1 and 2, a first divider wall 60 separates the central combustion chamber portion 28 from the first end diffuser portion 42. The first divider wall 60 includes an outer perimeter 62 and a central orifice 64 for passage of initiation discharge from the initiator 30 to the central combustion chamber portion 28. The first divider wall 60 also includes a plurality of outer orifices 66 disposed between the central orifice 64 and the first divider wall outer perimeter 62. The outer orifices 66 allow for passage of gas produced within the combustion chamber 28 to move from the combustion chamber 28 into the first end diffuser portion 42. The first divider wall 60 additionally comprises a tubular sleeve 68 extending from the central orifice toward the initiator 30. A portion of the initiator 30 is disposed within the tubular sleeve 68. The tubular sleeve 68 directs the reaction products produced by the activated initiator 30 through the central orifice 64 and into the central combustion chamber 28.

A second divider wall 70 separates the central combustion chamber portion 28 from the second end diffuser portion 44. The second divider wall 70 includes an outer perimeter 72 and a central orifice 74 for passage of gas produced within the combustion chamber 28 to flow from the combustion chamber 28 into the second end diffuser portion 44. In one embodiment of this invention, the central orifice 74 is the primary inflation gas orifice, such that more gas exits the combustion chamber portion 28 through the orifice 74 than the outer orifices 66. The first and second divider walls 60 and 70, in conjunction with associated orifices 66 and 74, desirably assist in maintaining consistent pressure in the central combustion chamber 28 upon actuation of the gas generant material 32.

Within the central combustion chamber 28 is a canister 78 to form, at least in part, a hermetic seal around at least the supply of gas generant material 32. A damper pad 75 formed of a flexible material such as rubber, as is known and available to those skilled in the art, is disposed at an end of the canister 78 adjacent the second divider wall 70. An optional autoignition material 79 having a lower autoignition temperature than the generant material 32 is also disposed within canister 78. In the event that an inflator device containing such an autoignition material is exposed to abnormally elevated temperatures, the autoignition material will desirably ignite at a temperature lower than that at which undesirable thermal stress of the inflator device housing may occur. Such ignited autoignition material desirably ignites associated gas generant materials at a temperature below that at which undesirable degradation or decomposition of the gas generant materials may occur.

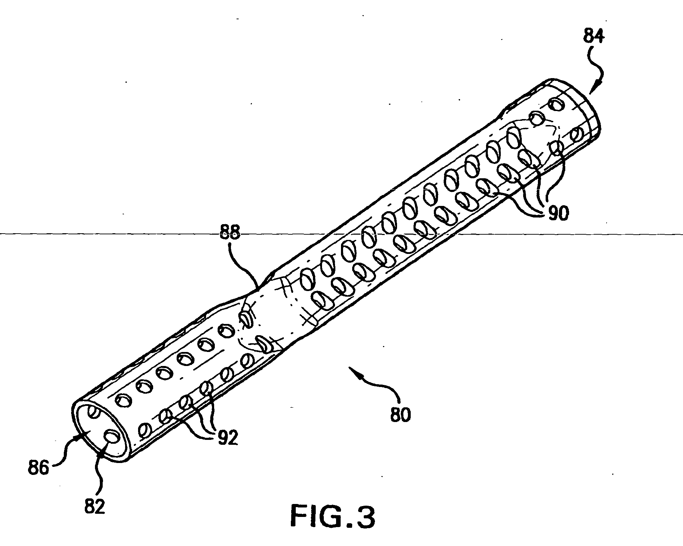

Within both the central combustion chamber 28 and the canister 78 is a baffle 80. The baffle 80, as shown in FIGS. 1 and 3, defines a passageway 82 having a first end 84 and a second end 86. The passageway first end 84 is disposed toward the first end 24. The initiator 30 is disposed in initiation discharge flow communication, through sleeve 68, with the passageway first end 84. The baffle 80 includes a blockage 88 disposed to restrict fluid flow between the first and second ends 84 and 86. The blockage can be a crimped baffle portion as shown in FIGS. 1 and 3, or be formed by, for example, a wall element.

The baffle 80 includes a plurality of first end holes 90 formed proximate the passageway first end 84, and a plurality of second end holes 92 formed proximate the passageway second end 86. The supply of gas generant material 32 is disposed outside the passageway 82. The initiation discharge from the initiator 30 flows into the passageway 82 and out through the first end holes 90. The gas generant material 32 actuates in response to receipt of the initiation discharge to produce gas. A portion of the produced gas flows into the passageway second end 86 through the second end holes 92. The baffle 80 desirably improves the distribution of the initiator reaction products to the pyrotechnic gas generant material along the extended length of the combustion chamber 28, thereby providing a more uniform ignition of the gas generant material 32. As shown in FIGS. 1 and 3, the baffle 80 is partially crimped along the passageway first end 84, to reduce the internal area of the passageway first end 84 to further promote effective ignition product distribution.

In the embodiment of FIG. 1, a strainer element 100 is disposed between the baffle 80 and the first divider wall 60. The strainer element 100 includes a strainer passageway 102 disposed between the central orifice 64 and the passageway first end 84. The strainer element 100 includes an outward extending flange 104 extending between the supply of gas generant material 32 and the outer orifices 66. The flange 104 includes a plurality of strainer orifices 106. The strainer orifices 106 desirably assist in reducing or eliminating any particulate discharge from the combustion chamber 28.

FIG. 1 includes a plurality of arrows illustrating the general flow within inflator 20. Reaction products from activated initiator 30 travel as indicated by arrows 110 through orifice 64 and out baffle first end holes 90 to actuate the gas generant material 32. A portion of the produced gas from gas generant material 32, indicated by arrow 112, enters the baffle passageway second end 86, flows through orifice 74, into second filter 52 and out the second plurality of inflation gas discharge openings 50. A second portion of the produced gas travels through strainer orifices 106 and into first filter 48, as indicated by arrow 114, and ultimately out the first plurality of inflation gas discharge openings 46.

The inflator 20 allows for initial ignition of the gas generant material 32 and exiting of produced gas to occur at the same end of the inflator device, as well as gas exiting at the generally standard opposing diffuser end of the inflator device. Gas discharge openings at both ends of the inflator allows for greater flexibility in airbag module design, and avoids the need to redirect the gas flow upon exiting the inflator. In one embodiment of this invention, illustrated in FIG. 1, the inflatable airbag cushion 115 in inflation communication with the inflator includes at least a first inflatable chamber 116 and a second inflatable chamber 118. The inflatable airbag cushion 115 is desirably associated with the inflator 20, e.g., disposed around and clamped thereto, with the first inflatable chamber 116 disposed in inflation gas receiving communication with the first plurality of inflation gas discharge openings 46 at the first axial end 24, and the second inflatable chamber 118 disposed in inflation gas receiving communication with the second plurality of inflation gas discharge openings 50 at the second axial end 26. In one embodiment of the invention, the inflatable airbag cushion 116 is a side curtain airbag. In one embodiment of this invention, the inflator desirably fills the two airbag cushion chambers, such as, for example, a pelvis portion chamber and a thorax portion chamber, at different degrees of inflation. The sizing and/or configuration of the orifices/openings at each end can be used to control the relative (i.e., proportional) amount of inflation gas exiting each end of the inflator.

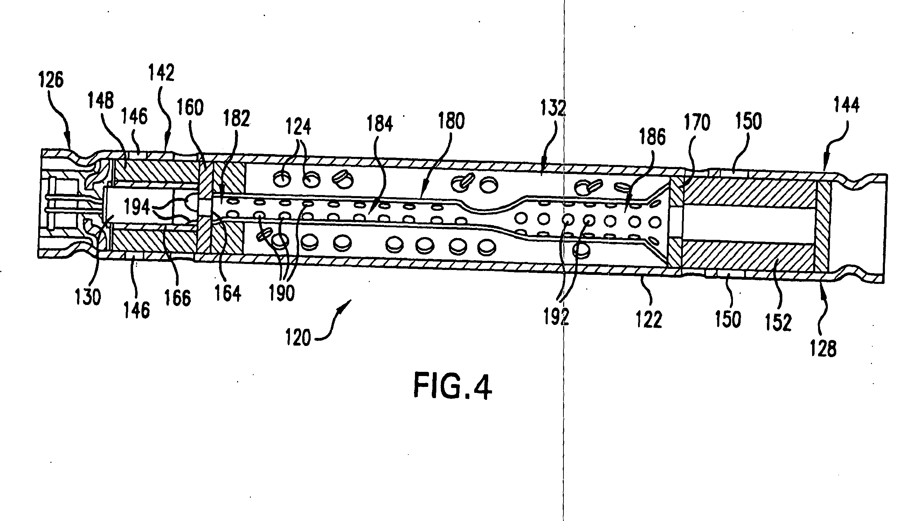

FIG. 4 illustrates an inflator 120 according to another embodiment of this invention. The inflator 120 includes an axially elongated housing 122 containing a supply of gas generant material 124 reactable to produce a supply of gas. The housing 122 has opposed first and second axial ends 126 and 128. An initiator 130 is disposed at the first axial end 126 in initiation discharge communication, in response to receipt of an activation signal, with at least a portion of the supply of the gas generant material 124.

The housing 122 includes a central combustion chamberportion 132 containing the supply of gas generant material 124. A first end diffuser portion 142 and a second end diffuser portion 144 are spaced apart by the central combustion chamber portion 132 and disposed at opposed first and second axial ends 126 and 128, respectively. A first plurality of inflation gas discharge openings 146 are disposed toward the first axial end 126 and are a part of the first end diffuser portion 142. A first filter element 148 is disposed within the first end diffuser portion 142 and effective to treat gas produced within the combustion chamber 132 prior to passage through the first plurality of inflation gas discharge openings 146 into an associated airbag.

A second plurality of inflation gas discharge openings 150 are similarly disposed toward the second axial end 128, and are a part of the second end diffuser portion 144. A second filter element 152 is disposed within the second end diffuser portion 144 and is effective to treat gas produced within the combustion chamber 132 prior to passage through the second plurality of inflation gas discharge openings 150.

A first divider wall 160 separates the central combustion chamber portion 132 from the first end diffuser portion 142. The first divider wall 160 includes a central orifice 164 for passage of initiation discharge from the initiator 130 to the central combustion chamber portion 132. The first divider wall 160 additionally comprises a tubular sleeve 166 extending from the central orifice 164 toward the initiator 130. A portion of the initiator 130 is disposed within the tubular sleeve 166. The tubular sleeve 166 directs the reaction products produced by the activated initiator 130 through the central orifice 166 and into the central combustion chamber 132.

A second divider wall 170 separates the central combustion chamber portion 132 from the second end diffuser portion 144. The second divider wall 170 includes a central orifice 174 for passage of gas produced within the combustion chamber 132 to flow from the combustion chamber 132 into the second end diffuser portion 144.

A baffle 180 extends between the first and second divider walls 160 and 170 within the combustion chamber 132. The baffle 180 defines a passageway 182 having a first end 184 and a second end 186. The passageway first end 184 is disposed toward the first end 126. The initiator 130 is disposed in initiation discharge flow communication with the passageway first end 184. The baffle 180 includes a blockage 188 disposed to restrict fluid flow between the first and second ends 184 and 186.

The baffle 180 includes a plurality of first end holes 190 formed proximate the passageway first end 184, and a plurality of second end holes 192 formed proximate the passageway second end 186. The supply of gas generant material 124 is disposed outside the passageway 182. The initiation discharge from the initiator 130 flows into the passageway 182 and out through the first end holes 190. The gas generant material 124 actuates in response to receipt of the initiation discharge to produce gas. A portion of the produced gas flows into the passageway second end 186 through the second end holes 192, and ultimately out the second plurality of inflation gas discharge openings 150. A second portion of the gas flows back into the passageway first end 184 through the first end holes 190. The second portion of gas within the passageway first end 184 enters the tubular sleeve 166 through the central orifice 164. The tubular sleeve 166 includes a plurality of radial sleeve openings 194 through which the gas enters the first filter 148, and ultimately out the first plurality of inflation gas discharge openings 146.

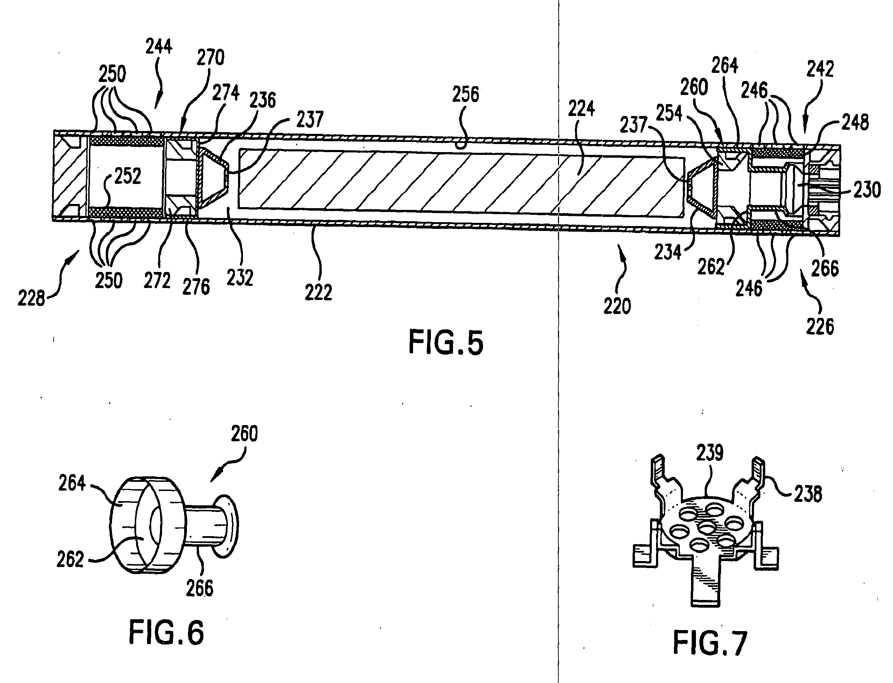

FIG. 5 illustrates an inflator 220 according to another embodiment of this invention. The inflator 220 includes an axially elongated housing 222 containing a supply of gas generant material 224 reactable to produce a supply of gas. The housing 222 has opposed first and second axial ends 226 and 228. An initiator 230 is disposed at the first axial end 226 in initiation discharge communication, in response to receipt of an activation signal, with at least a portion of the supply of the gas generant material 224.

The housing 222 includes a central combustion chamber portion 232 containing the supply of gas generant material 224. The gas generant material 224 can be secured in the central combustion chamber portion 232 by a pair of grain holders 234 and 236. The grain holders 234 and 236 desirably include one or more openings 237 to allow produced inflation gas to pass therethrough. Various and alternative sizes, shapes and configurations are available for the grain holders of this invention. FIG. 7 illustrates an example of a grain holder 238 according to one embodiment of this invention, including a perforated plate portion 239.

A first end diffuser portion 242 and a second end diffuser portion 244 are spaced apart by the central combustion chamber portion 232 and disposed at opposed first and second axial ends 226 and 228, respectively. A first plurality of inflation gas discharge openings 246 are disposed toward the first axial end 226 and are a part of the first end diffuser portion 242. A first filter element 248 is disposed within the first end diffuser portion 242 and effective to treat gas produced within the combustion chamber 232 prior to passage through the first plurality of inflation gas discharge openings 246 into an associated airbag.

A second plurality of inflation gas discharge openings 250 are similarly disposed toward the second axial end 228, and are a part of the second end diffuser portion 244. A second filter element 252 is disposed within the second end diffuser portion 244 and is effective to treat gas produced within the combustion chamber 232 prior to passage through the second plurality of inflation gas discharge openings 250.

The embodiment shown in FIG. 5 incorporates a shaped rupturable membrane 260 as a desirably airtight seal between the gas generant material 224 and the first plurality of inflation gas discharge openings 246. As shown in FIGS. 5 and 6, the shaped rupturable membrane 260 includes a base portion 262 having a first surface facing the initiator assembly and a second surface on a side opposite the first surface and facing the supply of gas generant material 224. A first sleeve portion 264 extends from an outer edge of the base portion 262, and, as shown in FIG. 5, is disposed adjacent a storage chamber inner surface 256 and between the inner surface 256 and the outer circumference of a nozzle ring 254. A second sleeve 266 extends from the second surface of the base portion 262, and around a portion of the initiator 230. Upon reaction initiation of at least one of the initiator 230 and the gas generant material 224, the rupturable membrane 260 ruptures to allow produced inflation gas to exit the inflator device 220 through the filter 248 and the first plurality of inflation gas discharge openings 246. The rupturable membrane 260 can be formed of various and alternative materials, such as are known and available to those skilled in the art, for example, a thin, stamped metal.

To similarly seal the second axial end 228, a second, and slightly differently shaped, rupturable membrane 270 is disposed around a second nozzle ring 272 at the second axial end 228. The second rupturable membrane 270 includes only a base portion 274 and one sleeve 276, as no initiator is disposed at the second axial end 228.

The embodiment shown in FIG. 5 includes the two nozzle rings 254 and 272 disposed between the gas generant material 224 and the filter elements 248 and 252, respectively. The nozzle rings 254 and 272 can desirably be used to determine, at least in part, pressure inside the combustion chamber portion 232, and also, ultimately, the performance of the inflator 220.

Thus, the invention provides an inflator for an inflatable airbag restraint system that allows for ignition and exiting of gas to occur at the same inflator end, as well as gas exiting at the standard opposing diffuser end of the inflator device. Gas discharge openings at both ends of the axial flow inflator alllows for greater flexibility in airbag module design, and avoids the need to redirect the gas flow upon exiting the inflator.

The invention illustratively disclosed herein suitably may be practiced in the absence of any element, part, step, component, or ingredient which is not specifically disclosed herein.

While in the foregoing detailed description this invention has been described in relation to certain preferred embodiments thereof, and many details have been set forth for purposes of illustration, it will be apparent to those skilled in the art that the invention is susceptible to additional embodiments and that certain of the details described herein can be varied considerably without departing from the basic principles of the invention.

## Claims

1. An inflator (20, 120, 220) comprising:
an axially elongated housing (22, 122, 222) containing a supply of gas generant material (32, 124, 224) reactable to produce a supply of gas, the housing having opposed first and second axial ends (24, 126, 226; 26, 128, 228); and
an initiator (30, 130, 230) disposed at the first axial end (24, 126, 226) in initiation discharge communication, in response to receipt of an activation signal, with at least a portion of the supply of the gas generant material (32, 124, 224);
the housing (22, 122, 222) comprising a first plurality of inflation gas discharge openings (46, 146, 246) adjacent the first axial end and a second plurality of inflation gas discharge openings (50, 150, 250) adjacent the second axial end,
said inflator being **characterized in that** it additionally comprises:
a baffle (80, 180) disposed within the housing (22, 122), the baffle comprising:
a passageway (82, 182) having a first end (84, 184) and a second end (86,186),
a blockage (88, 188) disposed to restrict fluid flow between the first and second ends,
a plurality of first end holes (90, 190) formed proximate the passageway first end, and
a plurality of second end holes (92, 192) formed proximate the passageway second end (86, 186);
the initiator (30, 130) being further disposed in initiation discharge flow communication with the passageway first end (84, 184), and
at least a substantial portion of the supply of gas generant material (32, 124) being disposed outside the passageway (82, 182) to receive the initiation discharge through the first end holes (90, 190), combust in response to receipt of the initiation discharge to produce gas, and communicate at least a portion of the gas into the second end (86, 186) through the second end holes (92, 192).

2. The inflator according to claim 1 **characterized in that** wherein the supply of gas generant material (32, 124, 224) comprises a supply of pyrotechnic material.

3. The inflator according to claim 1 or claim 2 **characterized in that** it additionally comprises a canister (78) disposed within the housing to form a hermetic seal around at least the supply of gas generant material.

4. The inflator according to any one of the preceding claims **characterized in that**:
the axially elongated housing (22, 122, 222) forms:
a central combustion chamber portion (28, 132, 232), and
first and second end diffuser portions (42, 142, 242; 44, 144, 244) spaced apart by the central combustion chamber portion (42, 142, 242), the first end diffuser portion including the first plurality of inflation gas discharge openings (46,146, 246) of the housing, the second end diffuser portion (44, 144, 244) including the second plurality of inflation gas discharge openings (50, 150, 250) of the housing.

5. The inflator of claim 4 **characterized in that** it additionally comprises:
a first filter element (48, 148, 248) disposed within the first end diffuser portion (42, 142, 242) and effective to treat gas produced within the combustion chamber (28, 132, 232) prior to passage through the first plurality of inflation gas discharge openings (46, 146, 246).

6. The inflator according to claim 4 or claim 5 **characterized in that** additionally comprises:
a second filter element (52, 152, 252) disposed within the second end diffuser portion (44, 144, 244) and effective to treat gas produced within the combustion chamber (28,132, 232) prior to passage through the second plurality of inflation gas discharge openings (50, 150, 250).

7. The inflator according to any one of claims 4 to 6 **characterized in that** additionally comprises:
a first divider wall (60, 160, 260) separating the central combustion chamber portion (28, 132, 232) from the first end diffuser portion (42, 142, 242); and
a second divider wall (70, 170,270) separating the central combustion chamber portion (28, 132, 232) from the second end diffuser portion (44, 144, 244).

8. The inflator of claim 7 **characterized in that**:
the first divider wall (60, 160, 260) comprises an outer perimeter (62) and a central orifice (64, 164) for passage of initiation discharge from the initiator (30, 130) to the central combustion chamber portion (28, 132), the-first divider wall (60, 160, 260) also comprising at least one outer orifice (66) disposed between the central orifice (64, 164) and the first divider wall outer perimeter (62) for passage of gas produced within the combustion chamber from the combustion chamber (28, 132, 232) and into the first end diffuser portion (42, 142, 242).

9. The inflator of claim 8 **characterized in that**:
the first divider (60, 160, 260) wall additionally comprises a tubular sleeve (68, 166, 266) extending from the central orifice (64, 164) toward the initiator (30, 130, 230) and wherein at least a portion of the initiator is received.

10. The inflator according to any one of claims 7 to 9 **characterized in that**:
the second divider wall (70, 170) comprises an outer perimeter (72) and a central orifice (74, 174) for passage of gas produced within the combustion chamber (28, 132) from the combustion chamber and into the second end diffuser portion (44, 144).

11. The inflator according to any one of the preceding claims **characterized in that** the axially elongated housing (22, 122, 222) is cylindrical with a length to diameter ratio of at least 3.

12. The inflator according to any one of the preceding claims **characterized in that** the axially elongated housing (22, 122, 222) is cylindrical with a length to diameter ratio in the range of 3 to 8.

13. An airbag module assembly comprising:
an inflatable airbag cushion (115); and
an inflator according to any one of the preceding claims in inflation communication with this inflatable airbag cushion.

14. The airbag module assembly of claim 13 **characterized in that**:
the inflatable airbag cushion (115) includes at least a first and a second inflatable chamber, the first inflatable chamber (116) is disposed in inflation gas receiving communication with the first plurality of inflation gas discharge openings (46, 146, 246), and the second inflatable chamber (118) is disposed in inflation gas receiving communication with the second plurality of inflation gas discharge openings (50, 150, 250).

## Patentansprüche

1. Ein Inflator (20, 120, 220), umfassend:
ein in axialer Richtung länglich ausgebildetes Gehäuse (20, 122, 222), das einen Vorrat an gaserzeugendem Material (32, 124, 224) enthält, welches reagieren kann, um einen Bestand an Gas zu erzeugen, wobei das Gehäuse gegenüberliegende erste und zweite axiale Enden (24, 126, 226; 26, 128, 228) aufweist; und
einen Initiator (30, 130, 230), der an dem ersten axialen Ende (24, 126, 226) angeordnet ist und in Antwort auf den Erhalt eines Aktivierungssignals in Initiierungsablassverbindung mit zumindest einem Teil des Vorrats an gaserzeugendem Material (32, 124, 224) steht;
wobei das Gehäuse (22, 122, 222) eine erste Vielzahl von Inflationsgasablassöffnungen (46, 146, 246), die dem ersten axialen Ende benachbart sind, und eine zweite Vielzahl von Inflationsgasablassöffnungen (50, 150, 250), die dem zweiten axialen Ende benachbart sind, aufweist,
wobei der Inflator **dadurch gekennzeichnet ist, dass** er zusätzlich umfasst:
eine Drossel (80, 180), die innerhalb des Gehäuses (22, 122) angeordnet ist, wobei die Drossel umfasst:
einen Durchgang (82, 182), der ein erstes Ende (84, 184) und ein zweites Ende (86, 186) aufweist,
eine Blockade (88, 188), die zur Beschränkung des Fluidflusses zwischen dem ersten und dem zweiten Ende angeordnet ist,
eine Vielzahl von ersten Endlöchern (90, 190), die in der Nähe des ersten Endes des Durchgangs gebildet sind, und
eine Vielzahl von zweiten Endlöchern (92, 192), die in der Nähe des zweiten Endes (86, 186) des Durchgangs gebildet sind;
wobei der Initiator (30, 130) des Weiteren in Initiierungsabflussverbindung mit dem ersten Ende (84, 184) des Durchgangs angeordnet ist, und
wobei zumindest ein erheblicher Teil des Vorrats an gaserzeugendem Material (32, 124) außerhalb des Durchgangs (82, 182) angeordnet ist, um den Initiierungsabfluss durch die ersten Endlöcher (90, 190) zu erhalten, in Antwort auf den Erhalt des Initiierungsabflusses verbrennt, um Gas zu erzeugen, und zumindest einen Teil des Gases in das zweite Ende (86, 186) durch die zweiten Endlöcher (92, 192) leitet.

2. Der Inflator nach Anspruch 1, **dadurch gekennzeichnet, dass** der Vorrat an gaserzeugendem Material (32, 124, 224) einen Vorrat an pyrotechnischem Material aufweist.

3. Der Inflator nach Anspruch 1 oder 2, **dadurch gekennzeichnet, dass** er zusätzlich einen Behälter (78) aufweist, der innerhalb des Gehäuses angeordnet ist, um eine hermetische Abdichtung um zumindest den Vorrat an gaserzeugendem Material zu bilden.

4. Der Inflator nach einem der vorhergehenden Ansprüche, **dadurch gekennzeichnet, dass**:
das in axialer Richtung länglich ausgebildete Gehäuse (22, 122, 222) bildet:
einen zentralen Verbrennungskammerabschnitt (28, 132, 232), und
erste und zweite Enddiffusorabschnitte (42, 142, 242; 44, 144 244), die um den zentralen Verbrennungskammerabschnitt (42, 142, 242) beabstandet sind, wobei der erste Enddiffusorabschnitt die erste Vielzahl von Inflationsgasablassöffnungen (46, 146, 246) des Gehäuses umfasst, und wobei der zweite Enddiffusorabschnitt (44, 144, 244) die zweite Vielzahl von Inflationsgasablassöffnungen (50, 150, 250) des Gehäuses umfasst.

5. Der Inflator nach Anspruch 4, **dadurch gekennzeichnet, dass** er zusätzlich umfasst:
ein erstes Filterelement (48, 148, 248), das innerhalb des ersten Enddiffusorabschnitts (42, 142, 242) angeordnet ist und dahingehend wirkt, dass es das innerhalb der Verbrennungskammer (28, 132, 232) erzeugte Gas vor dem Durchfluss durch die erste Vielzahl von Inflationsgasablassöffnungen (46, 146, 246) behandelt.

6. Der Inflator nach Anspruch 4 oder 5, **dadurch gekennzeichnet, dass** er zusätzlich umfasst:
ein zweites Filterelement (52, 152, 252), das innerhalb des zweiten Enddiffusorabschnitts (44, 144, 244) angeordnet ist und dahingehend wirkt, dass es das innerhalb der Verbrennungskammer (28, 132, 232) erzeugte Gas vor dem Durchfluss durch die zweite Vielzahl von Inflationsgasablassöffnungen (50, 150, 250) behandelt.

7. Der Inflator nach einem der Ansprüche 4 bis 6, **dadurch gekennzeichnet, dass** er zusätzlich umfasst:
eine erste Trennwand (60, 160, 260), welche den zentralen Verbrennungskammerabschnitt (28, 132, 232) von dem ersten Enddiffusorabschnitt (42, 142, 242) trennt; und
eine zweite Trennwand (70, 170, 270), welche den zentralen Verbrennungskammerabschnitt (28, 132, 232) von dem zweiten Enddiffusorabschnitt (44, 144, 244) trennt.

8. Der Inflator nach Anspruch 7, **dadurch gekennzeichnet, dass**
die erste Trennwand (60, 160, 260) einen Außenumfang (62) und eine zentrale Blende (64, 164) für den Durchfluss von Initierungsabfluss von dem Initiator (30, 130) zu der zentralen Verbrennungskammer (28, 132) aufweist, wobei die erste Trennwand (60, 160, 260) ebenso zumindest eine äußere Blende (66) aufweist, die zwischen der zentralen Blende (64, 164) und dem Außenumfang (62) der ersten Trennwand angeordnet ist für den Durchfluss von innerhalb der Verbrennungskammer erzeugtem Gas von der Verbrennungskammer (28, 132, 232) in den ersten Enddiffusorabschnitt (42, 142, 242).

9. Der Inflator nach Anspruch 8, **dadurch gekennzeichnet, dass**
die erste Trennwand (60, 160, 260) zusätzlich eine schlauchförmige Manschette (68, 166, 266) aufweist, die von der zentralen Blende (64, 164) zu dem Initiator (30, 130, 230) verläuft und in der zumindest ein Abschnitt des Initiators aufgenommen ist.

10. Der Inflator nach einem der Ansprüche 7 bis 9, **dadurch gekennzeichnet, dass**
die zweite Trennwand (70, 170) einen Außenumfang (72) und eine zentrale Blende (74, 174) aufweist für den Durchfluss von innerhalb der Verbrennungskammer (28, 132) erzeugtem Gas von der Verbrennungskammer in den zweiten Enddiffusorabschnitt (44, 144).

11. Der Inflator nach einem der vorhergehenden Ansprüche, **dadurch gekennzeichnet, dass** das in axialer Richtung länglich ausgebildete Gehäuse (22, 122, 222) zylindrisch ist mit einem Verhältnis von Länge zu Durchmesser von zumindest 3.

12. Der Inflator nach einem der vorhergehenden Ansprüche, **dadurch gekennzeichnet, dass** das in axialer Richtung länglich ausgebildete Gehäuse (22, 122, 222) zylindrisch ist mit einem Verhältnis von Länge zu Durchmesser im Bereich von 3 bis 8.

13. Eine Airbagmoduleinheit, umfassend:
ein aufblasbares Airbagkissen (115); und
einen Inflator gemäß einem der vorhergehenden Ansprüche in Aufblasverbindung mit dem aufblasbaren Airbagkissen.

14. Die Airbagmoduleinheit nach Anspruch 13, **dadurch gekennzeichnet, dass**
das aufblasbare Airbagkissen (115) zumindest eine erste und eine zweite aufblasbare Kammer umfasst, wobei die erste aufblasbare Kammer (116) in Inflationsgaserhaltsverbindung mit der ersten Vielzahl von Inflationsgasablassöffnungen (46, 146, 246) angeordnet ist, und wobei die zweite aufblasbare Kammer (118) in Inflationsgaserhaltverbindung mit der zweiten Vielzahl von Inflationsgasablassöffnungen (50, 150, 250) angeordnet ist.

## Revendications

1. Dispositif de gonflage (20, 120, 220) comprenant :
un boîtier axialement allongé (22, 122, 222) comprenant une charge de matériau générateur de gaz (32, 124, 224) pouvant réagir pour produire une alimentation de gaz, le boîtier ayant des première et deuxième extrémités axiales opposées (24, 126, 226 ; 26, 128, 228) ; et
un initiateur (30, 130, 230) disposé au niveau de la première extrémité axiale (24, 126, 226) en communication de décharge d'initiation, en réponse à la réception d'un signal d'activation, avec au moins une partie de la charge de matériau générateur de gaz (32, 124, 224) ;
le boîtier (22, 122, 222) comprenant une première pluralité d'ouvertures de décharge de gaz de gonflage (46, 146, 246) adjacentes à la première extrémité axiale et une deuxième pluralité d'ouvertures de décharge de gaz de gonflage (50, 150, 250) adjacentes à la deuxième extrémité axiale,
ledit dispositif de gonflage étant **caractérisé en ce qu'**il comprend en outre :
un déflecteur (80, 180) disposé à l'intérieur du boîtier (22, 122), le déflecteur comprenant :
une voie de passage (82, 182) ayant une première extrémité (84, 184) et une deuxième extrémité (86, 186),
un blocage (88, 188) disposé pour limiter l'écoulement de fluide entre les première et deuxième extrémités,
une pluralité de premiers trous d'extrémité (90, 190) formés à proximité de la première extrémité de la voie de passage, et
une pluralité de deuxièmes trous d'extrémité (92, 192) formés à proximité de la deuxième extrémité de la voie de passage (86, 186) ;
l'initiateur (30, 130) étant en outre disposé en communication d'écoulement de décharge d'initiation avec la première extrémité de la voie de passage (84, 184), et
au moins une partie substancielle de la charge de matériau générateur de gaz (32, 124) étant disposée à l'extérieur de la voie de passage (82, 182) pour recevoir la décharge d'initiation par le biais des premiers trous de passage (90, 190), brûler en réponse à la réception de la décharge d'initiation pour produire le gaz, et communiquer au moins une partie du gaz dans la deuxième extrémité (86, 186) par le biais des deuxièmes trous d'extrémité (92, 192).

2. Dispositif de gonflage selon la revendication 1, **caractérisé en ce que** la charge de matériau générateur de gaz (32, 124, 224) comprend une charge de matériau pyrotechnique.

3. Dispositif de gonflage selon la revendication 1 ou la revendication 2, **caractérisé en ce qu'**il comprend en outre une boîte (78) disposée à l'intérieur du logement afin de former un joint d'étanchéité hermétique autour au moins de la charge de matériau générateur de gaz.

4. Dispositif de gonflage selon l'une quelconque des revendications précédentes, **caractérisé en ce que** :
le boîtier axialement allongé (22, 122, 222) fourme :
une partie de chambre de combustion centrale (28, 132, 232), et
des première et deuxième parties de diffuseur d'extrémité (42, 142, 242 ; 44, 144, 244) espacées par la partie de chambre de combustion centrale (42, 142, 242), la première partie de diffuseur d'extrémité comprenant la première pluralité d'ouvertures de décharge de gaz de gonflage (46, 146, 246) du boîtier, la deuxième partie de diffuseur d'extrémité (44, 144, 244) comprenant la deuxième pluralité d'ouvertures de décharge de gaz de gonflage (50, 150, 250) du boîtier.

5. Dispositif de gonflage selon la revendication 4, **caractérisé en ce qu'**il comprend en outre :
un premier élément de filtre (48, 148, 248) disposé à l'intérieur de la première partie de diffuseur d'extrémité (42, 142, 242) et efficace pour traiter le gaz produit à l'intérieur de la chambre de combustion (28, 132, 232) avant de passer à travers la première pluralité d'ouvertures de décharge de gaz de gonflage (46, 146, 246).

6. Dispositif de gonflage selon la revendication 4 ou la revendication 5, **caractérisé en ce qu'**il comprend en outre :
un deuxième élément de filtre (52, 152, 252) disposé à l'intérieur de la deuxième partie de diffuseur d'extrémité (44, 144, 244) et efficace pour traiter le gaz produit à l'intérieur de la chambre de combustion (28, 132, 232) avant de passer à travers la deuxième pluralité d'ouvertures de décharge de gaz de gonflage (50, 150, 250).

7. Dispositif de gonflage selon l'une quelconque des revendications 4 à 6, **caractérisé en ce qu'**il comprend en outre :
une première paroi de séparation (60, 160, 260) séparant la partie de chambre de combustion centrale (28, 132, 232) de la première partie de diffuseur d'extrémité (42, 142, 242) ; et
une deuxième paroi de séparation (70, 170, 270) séparant la partie de chambre de combustion centrale (28, 132, 232) de la deuxième partie de diffuseur d'extrémité (44, 144, 244).

8. Dispositif de gonflage selon la revendication 7, **caractérisé en ce que** :
la première paroi de séparation (60, 160, 260) comprend un périmètre externe (62) et un orifice central (64, 164) pour le passage de décharge d'initiation de l'initiateur (30, 130) jusqu'à la partie de chambre de combustion centrale (28, 132), la première paroi de séparation (60, 160, 260) comprenant également au moins un orifice externe (66) disposé entre l'orifice central (64, 164) et le périmètre externe (62) de la première paroi de séparation pour le passage de gaz produit à l'intérieur de la chambre de combustion, depuis la chambre de combustion (28, 132, 232) et dans la première partie de diffuseur d'extrémité (42, 142, 242).

9. Dispositif de gonflage selon la revendication 8, **caractérisé en ce que** :
la première paroi de séparation (60, 160, 260) comprend en outre un manchon tubulaire (68, 166, 266) s'étendant à partir de l'orifice central (64, 164) vers l'initiateur (30, 130, 230) et dans lequel au moins une partie de l'initiateur est reçue.

10. Dispositif de gonflage selon l'une quelconque des revendications 7 à 9, **caractérisé en ce que** :
la deuxième paroi de séparation (70, 170) comprend un périmètre externe (72) et un orifice central (74, 174) pour le passage du gaz produit à l'intérieur de la chambre de combustion (28, 132), depuis la chambre de combustion et dans la deuxième partie de diffuseur d'extrémité (44, 144).

11. Dispositif de gonflage selon l'une quelconque des revendications précédentes, **caractérisé en ce que** le boîtier axialement allongé (22, 122, 222) est cylindrique avec un rapport longueur sur diamètre d'au moins 3.

12. Dispositif de gonflage selon l'une quelconque des revendications précédentes, **caractérisé en ce que** le boîtier axialement allongé (22, 122, 222) est cylindrique avec un rapport longueur sur diamètre de l'ordre de 3 à 8.

13. Ensemble de module de coussin de sécurité gonflable comprenant :
un coussin de sécurité gonflable (115) ; et
un dispositif de gonflage selon l'une quelconque des revendications précédentes en communication de gonflage avec ce coussin de sécurité gonflable.

14. Ensemble de module de coussin de sécurité gonflable selon la revendication 13, **caractérisé en ce que** :
le coussin de sécurité gonflable (115) comprend au moins une première et une deuxième chambre gonflable, la première chambre gonflable (116) est disposée en communication de réception de gaz de gonflage avec la première pluralité d'ouverture de décharge de gaz de gonflage (46, 146, 246), et la deuxième chambre de gonflage (118) est disposée en communication de réception de gaz de gonflage avec la deuxième pluralité d'ouvertures de décharge de gaz de gonflage (50, 150, 250) .
